# EUROPÄISCHE PATENTANMELDUNG

(11) **EP 4 841 376 A1**
(43) Veröffentlichungstag der Anmeldung: **18.11.2026**
(21) Anmeldenummer: 26174647.3
(22) Anmeldetag: 27.04.2026
(51) Int. Cl.: G05B 19/418, G06Q 10/0639

(54) **COMPUTERIMPLEMENTIERTES VERFAHREN ZUR ANALYSE EINES MANUELLEN ARBEITSSCHRITTS UND ANORDNUNG**

(30) Priorität: 14.05.2025 DE 102025118669
(71) Anmelder: SICK AG, 79183 Waldkirch (DE)
(72) Erfinder: Schonhardt, Stefan, 79256 Buchenbach (DE)
(74) Vertreter: Manitz Finsterwald Patent- und Rechtsanwaltspartnerschaft mbB

(57) **Zusammenfassung**

In einer Ausführungsform weist ein computerimplementiertes Verfahren zur Analyse eines manuellen Arbeitsschritts folgende Schritte auf: mehrfaches optisches Erfassen mindestens einer während des Arbeitsschritts von einem Werker ausgeführten Bewegung, Erzeugen entsprechender Bilddaten, und Erstellen je einer Trajektorie aus den Bilddaten, wobei die Trajektorie mindestens eine Ortsinformation und eine zugehörige Zeitinformation umfasst; Bereitstellen einer Vielzahl von Trajektorien; Ermittlung mindestens einer Kenngröße der mindestens einen Bewegung durch Auswertung mehrerer der Vielzahl von erstellten Trajektorien; Bereitstellen eines Datensatzes in welchem der mindestens einen Bewegung die mindestens eine ermittelte Kenngröße zugeordnet ist.

## Beschreibung

Die vorliegende Erfindung betrifft ein computerimplementiertes Verfahren zur Analyse eines manuellen Arbeitsschritts, ein Verfahren zum computergestützten Erzeugen einer Tabelle für eine Arbeitsablaufzeitanalyse, ein Verfahren zum Überprüfen eines manuellen Arbeitsschritts und eine Anordnung zur Analyse und/oder zum Überprüfen eines manuellen Arbeitsschritts.

Auch in modernen Produktionsprozessen werden selbst bei hohem Grad der Automatisierung einzelne oder mehrere Arbeitsschritte manuell, also händisch, von einem menschlichen Werker durchgeführt. Im Rahmen einer Qualitätssicherung für derartige Arbeitsschritte ist es bekannt, die durchgeführten Tätigkeiten während eines Arbeitsschritts unter Einsatz bildgebender Verfahren zu überwachen oder das Endergebnis zu überprüfen. Neben der Qualität des Produkts oder Ergebnisse eines manuellen Arbeitsschritts sind auch die dabei entstehenden Kosten von Bedeutung, da diese einen Teil der Herstellungskosten eines zu fertigenden Produkts bilden.

Um Gesamtherstellungskosten eines Produkts bei der Planung abschätzen zu können, ist es deshalb nötig, die Fertigungskosten, die durch die dabei ausgeführten manuellen Arbeitsschritten entstehen, abschätzen zu können. Bekanntermaßen erfolgt dies derzeit über eine Bestimmung von Prozesszeiten für die jeweiligen manuellen Arbeitsschritte im Rahmen einer Methods-Time-Measurement, MTM-, Analyse. Die MTM Analyse ist eine Methode zur Beschreibung, Analyse und Bewertung manueller Tätigkeiten in der Fertigung. Dabei werden manuelle Tätigkeiten, also beispielsweise manuelle Arbeitsschritte, in Grundbewegungen zerlegt, für die jeweils ein standardisierter Zeitwert in der Einheit TMU, Time Measurement Unit, in einer entsprechenden Tabelle angegeben ist. Auf Basis einer MTM Analyse lassen sich folglich mit Hilfe der für die einzelnen Grundbewegungen angegebenen Zeitwerte Prozesszeiten für einen manuellen Arbeitsschritt in theoretischer Art und Weise im Voraus für ein neues Produkt ermitteln und somit entsprechende Fertigungskosten planen.

Anders ausgedrückt werden bei der Anwendung der MTM Analyse sämtliche von Menschen während eines Arbeitsschritts ausgeführten Bewegungen auf bestimmte Grundbewegungen zurückgeführt, für welche die benötigte Zeit aus den Tabellen entnommen wird. Von dieser Tabelle erfasste Bewegungselemente sind beispielsweise "Hinlangen", "Greifen", "Bringen", "Fügen", "Loslassen", "Gehen", "Beugen/Bücken", "visuelle Kontrolle" usw. Zu diesen Grundbewegungselementen sind in MTM-Tabellen empirisch ermittelte Zeiten hinterlegt, welche meist zusätzlich noch eine Abhängigkeit von weiteren Parametern, wie beispielsweise die mit der Bewegung zurückgelegte Entfernung beispielsweise in Form eines sogenannten Greifwegs, angeben. Es wird davon ausgegangen, dass die per MTM Analyse ermittelte Zeit für einen manuellen Arbeitsschritt derjenigen Zeit entspricht, die von einem durchschnittlichen geübten Beschäftigten über einen ganzen Arbeitstag hinweg erreicht werden kann.

Mit der beschriebenen MTM-Analyse, auch bekannt als Arbeitsablauf-Zeitanalyse, AAZ, können somit Plan- und Vorgabezeiten für einen manuellen Arbeitsschritt theoretisch ermittelt und darauf basierend entsprechende Herstellungskosten prognostiziert werden. In der Serienfertigung kommt es jedoch häufig aufgrund von Anpassungen basierend unter Umständen auf Erfahrung eines Werkers im laufenden Herstellungsprozess zu Abweichungen von den mittels MTM ermittelten Zeiten. In einem derartigen Fall ist es dann notwendig, mit Hilfe einer sogenannten REFA Analyse, Reichsausschuss für Arbeitszeitermittlung, die tabellarisch ermittelten Prozesszeiten durch Zeitmessungen der tatsächlichen Bewegungsabläufe anzupassen bzw. zu korrigieren und damit im Endeffekt die tatsächlichen Fertigungszeiten und Kosten zu ermitteln. Jedoch wird auch diese nachgelagerte REFA Analyse lediglich für wenige Beispielprozesse durchgeführt, die unter Umständen wieder nicht die Realität im Linienbetrieb widerspiegeln. Eine darauf beruhende Ermittlung von Fertigungskosten ist deshalb möglicherweise verfälscht. Zudem werden mögliche Optimierungen erschwert, da sich die tatsächlichen Kosten nicht eindeutig einem Prozess zuordnen lassen bzw. dies nur mit hohem Aufwand möglich ist.

Eine Aufgabe besteht folglich darin, eine gegenüber den bekannten Methoden verbesserte Analyse von händischen Arbeitsschritten zu ermöglichen. Insbesondere soll es ermöglicht werden, realistische Fertigungszeiten zu prognostizieren, was eine höhere Genauigkeit der zu erwartenden Produktkosten bereits in der Planungsphase gewährleistet.

Diese Aufgabe wird durch die Gegenstände der unabhängigen Patentansprüche gelöst. Weiterbildungen und Ausgestaltungen sind Gegenstände der abhängigen Patentansprüche.

Ein Aspekt der vorliegenden Anmeldung betrifft ein computerimplementiertes Verfahren zur Analyse eines manuellen Arbeitsschritts, welches die folgenden Schritte aufweist:
Mehrfaches optisches Erfassen mindestens einer während des Arbeitsschritts von einem Werker ausgeführten Bewegung, Erzeugen entsprechender Bilddaten und Erstellen je einer Trajektorie aus den Bilddaten, wobei die Trajektorie mindestens eine Ortsinformation und eine zugehörige Zeitinformation umfasst,
Bereitstellen einer Vielzahl von Trajektorien,
Ermittlung mindestens einer Kenngröße der mindestens einen Bewegung durch Auswerten mehrerer der Vielzahl von erstellten Trajektorien, und
Bereitstellen eines Datensatzes in welchem der mindestens einen Bewegung die mindestens eine ermittelte Kenngröße zugeordnet ist.

Erfindungsgemäß wird in dem computerimplementierten Verfahren die mehr oder minder gleiche Bewegung, die Teil des zu analysierenden manuellen Arbeitsschritts ist, mehrmals ausgeführt und dabei jeweils optisch erfasst. Die während dieser Erfassung erzeugten Bilddaten bilden die Grundlage für die Erstellung einer Vielzahl von Trajektorien, die auch jeweils als Bewegungsgraph bezeichnet werden können, wobei jede Trajektorie einer einmaligen Ausführung der Bewegung entspricht, was sich in der jeweiligen Orts- und Zeitinformation niederschlägt. Mehrere dieser Vielzahl von Bewegungsgraphen, insbesondere alle der bereitgestellten Trajektorien, werden analysiert, wodurch mindestens eine Kenngröße für die Bewegung ermittelt wird. Der ausgegebene Datensatz ordnet der Bewegung des manuellen Arbeitsschritts die ermittelte Kenngröße zu.

Das vorgeschlagene computerimplementierte Verfahren, welches auf einer automatisierten optischen Erfassung der während des Arbeitsschritts im laufenden Betrieb ausgeführten Bewegung basiert, ermöglicht die Erstellung des Datensatzes mit der mindestens einen Kenngröße für die analysierte Bewegung. Aufgrund der Vielzahl von Trajektorien, die zur Ermittlung der Kenngröße herangezogen wird, ist die ermittelte Kenngröße realistischer als eine für die entsprechende Bewegung in einer MTM-Tabelle hinterlegte Kenngröße, die üblicherweise auf wenigen Musterabläufen beruht. Somit lassen sich beispielsweise Fertigungskosten auf Basis des beschriebenen Verfahrens in der Planungsphase genauer berechnen.

Ein Beispiel für eine während des Arbeitsschritts ausgeführte Bewegung ist das Platzieren eines Bauteils auf einer Platine. Diese Bewegung wird also wie vorgeschlagen mehrfach, beispielsweise als Teil eines Arbeitsschritts in der laufenden Fertigung, von dem Werker ausgeführt und dabei jeweils optisch erfasst. Für jede ausgeführte Bewegung werden Bilddaten erzeugt und eine Trajektorie erstellt. Die bereitgestellte Vielzahl von Trajektorien für das Platzieren des Bauteils auf der Platine wird automatisiert analysiert, wodurch eine Kenngröße für diese Bewegung ermittelt wird.

In einer Weiterbildung erfolgt das optische Erfassen unter Verwendung einer an dem Werker oder an seinem Arbeitsplatz montierten Kamera.

Die Kamera ist an geeigneter Stelle an dem Werker oder an seinem Arbeitsplatz so montiert, dass die während des Arbeitsschritts ausgeführte Bewegung optisch erfasst wird. Der Arbeitsschritt kann auch mehrere Teilbewegungen umfassen. Mit dem vorgeschlagenen Verfahren kann für jede Teilbewegung des Arbeitsschritts eine separate Kenngröße ermittelt werden, welche bei der Berechnung realistischer Fertigungszeiten bzw. Kosten berücksichtigt werden kann.

Beispielsweise wird eine handelsübliche Videokamera, insbesondere eine sogenannte Field of View Kamera, eingesetzt. Diese ist entweder feststehend an dem Fertigungsarbeitsplatz montiert oder an dem Werker befestigt, beispielsweise an dessen Kopf oder Schulter. Selbstverständlich können auch noch eine oder mehrere weitere Kameras zur optischen Erfassung in dem angegebenen Verfahren eingesetzt werden. Die Bilddaten der Kameras würden in einem solchen Fall kombiniert zur Erstellung der Trajektorien verwendet werden. Beim beispielhaften Einsatz zweier Kameras können 3D-Daten erzeugt werden.

Der Einsatz einer Kamera zur optischen Erfassung der Bewegung erübrigt den Einsatz mehrerer Sensoren, die anderenfalls hierfür nötig wären. Zudem kann die Kamera ohne Störung des laufenden Produktionsprozesses, in welchem der manuelle Arbeitsschritt erfolgt, installiert werden. Es ist hierfür keinerlei Änderung an dem Arbeitsschritt und/oder der darin eingesetzten Maschinen oder Werkzeuge erforderlich.

Gemäß einer Ausprägung charakterisiert die mindestens eine Kenngröße die mindestens eine während des Arbeitsschritts ausgeführte Bewegung und weist einen der folgenden Werte auf: eine Zeitdauer, eine Geschwindigkeit, eine Beschleunigung, eine Streckenlänge, eine Komplexität jeweils der Bewegung.

Die Kenngröße kann auch als Kennzahl oder Parameter der analysierten Bewegung bezeichnet werden. Mit dem vorgeschlagenen Verfahren wird durch Auswertung der Trajektorien beispielsweise eine Zeitdauer der Bewegung und/oder eine Geschwindigkeit der Bewegung und/oder die während der Bewegung realisierte Beschleunigung und/oder die während der Bewegung zurückgelegte Strecke und/oder die Komplexität der Bewegung ermittelt. Die Komplexität einer Bewegung hängt beispielsweise von mehreren Einflussgrößen ab, wie der Entfernung, die zurückgelegt werden muss, der Genauigkeit der Bewegung und der Anzahl der beteiligten Körperteile. Komplexe Bewegungen können auch aus mehreren einfachen Bewegungen bestehen, die gleichzeitig oder nacheinander ausgeführt werden. Diese Kennzahlen werden wie vorgeschlagen automatisiert aus Bewegungen, die im laufenden Betrieb durchgeführt werden, ermittelt.

Gemäß einer Weiterbildung umfasst die Ermittlung der mindestens einen Kenngröße eine statistische Auswertung, insbesondere eine Mittelwertbildung. Die Kenngröße repräsentiert jeweils eine über mehrere der Vielzahl von Trajektorien gemittelte Zeitdauer, Geschwindigkeit, Beschleunigung, Streckenlänge und/oder Komplexität der Bewegung.

Durch die automatisierte Erfassung und Analyse der Bewegung des Arbeitsschritts lassen sich Mittelwerte der einen oder mehreren Kenngrößen berechnen, wodurch diese Kenngrößen deutlich realistischer sind, als bisherige einer MTM-Tabelle entnehmbare entsprechende Werte.

**In** einer Weiterbildung weist das Verfahren zusätzlich folgendes auf:
Generieren eines graphischen Bewegungsmusters der Bewegung anhand mehrerer der Vielzahl von erstellten Trajektorien, insbesondere durch Überlagerung und/oder Mittelung, und
Hinzufügen des Bewegungsmusters zu dem Datensatz.

Durch Überlagerung, beispielsweise graphische Überlagerung, und/oder Mittelung beispielsweise der Zeit und/oder Ortsinformation einer Auswahl oder aller mit dem erfindungsgemäßen Verfahren bereitgestellter Vielzahl von Trajektorien wird eine Mustertrajektorie erzeugt, welche das graphische Bewegungsmuster der analysierten Bewegung darstellt. Dieses Bewegungsmuster bildet also eine graphische Referenz der analysierten Bewegung und könnte auch als digitaler Zwilling dieser Bewegung bezeichnet werden. Das Bewegungsmuster wird dem erzeugten Datensatz hinzugefügt und mit abgespeichert. Durch die hohe Anzahl an Wiederholungen der analysierten Bewegung über einen fast beliebig langen Zeitraum können deutlich repräsentativere statistisch untermauerte Bewertungen beispielsweise in Form der beschriebenen Kennzahl für manuelle Arbeitsschritte ermittelt werden.

Gemäß einer Weiterbildung bildet der erfindungsgemäße Datensatz einen Eintrag einer Methods Time Measurement, MTM-, Tabelle und/oder einer REFA-Tabelle.

Die Tabelle kann beispielsweise in einer Datenbank gespeichert sein. Damit wird der beispielhaft textuell als "Bringen" bezeichneten Bewegung des analysierten manuellen Arbeitsschritts die ermittelte Kenngröße, wie etwa die Zeitdauer, die zu ihrer Ausführung benötigt wird, beispielsweise in der Einheit TMU, zugeordnet. Optional kann zu diesem Eintrag in der MTM Tabelle oder REFA Tabelle das beschriebene graphische Bewegungsmuster vorgesehen sein. Mit einer auf die erfindungsgemäße Weise erstellten MTM und/oder REFA Tabelle werden deutlich realistischere Kenngrößen für die Bewegung oder Bewegungen des analysierten manuellen Arbeitsschritts ermittelt und in bekannter Art und Weise in Form der REFA bzw. MTM Tabelle oder Bibliothek verfügbar gemacht. Die Ermittlung von Fertigungskosten für neue Produkte ist somit weniger von der Erfahrung eines Produktionsplaners abhängig. Durch die erfindungsgemäß exaktere Abschätzung von Fertigungskosten, bei der die erstellte Tabelle zum Einsatz kommt, können diese mit einer höheren Genauigkeit vorab bestimmt werden, wodurch sich die Profitabilität von Produkten bereits in der Planungsphase besser bestimmen lässt.

Gemäß einer Weiterbildung umfasst das Erstellen einer jeden Trajektorie die folgenden Schritte:
Erkennen eines die Bewegung durchführenden Körperteils, insbesondere einer Hand, des Werkers und/oder eines vom Werker geführten Werkzeugs und/oder Bauteils in den Bilddaten,
mehrfaches Bestimmen einer Position des Körperteils und/oder Werkzeugs und/oder Bauteils in aufeinanderfolgenden Einzelbildern der Bilddaten und Bereitstellen von entsprechenden Objektpunkten in einem Zeit-Ort-Diagramm, Anfertigen der Trajektorie durch Verbinden der Objektpunkte.

Dabei können beim Bestimmen der Position direkt aufeinanderfolgende Einzelbilder verwendet werden oder eine Auswahl von Einzelbildern aus den Bilddaten. Im Fall einer Verwendung direkt aufeinanderfolgender Einzelbilder werden die Objektpunkte direkt verbunden, während bei der Verwendung einer Auswahl von Einzelbildern bei der Verbindung der Objektpunkte Interpolation eingesetzt werden kann.

Die so jeweils angefertigte Trajektorie bildet die während des manuellen Arbeitsschritts ausgeführte Bewegung ab und ermöglicht eine Analyse zur Erzeugung der Kenngröße.

In einer Weiterbildung kann jede Trajektorie auch dreidimensional sein, beispielsweise mit zwei Ortsinformationen von aufeinander senkrecht stehenden Richtungen und einer zugehörigen Zeitinformation.

Ein weiterer Aspekt der vorliegenden Erfindung betrifft ein Verfahren zum computergestützten Erzeugen einer Tabelle für eine Arbeitsablaufzeitanalyse. Dieses weist die folgenden Schritte auf:
mehrfaches Durchlaufen des oben beschriebenen Verfahrens zur Analyse eines manuellen Arbeitsschritts für eine erste Bewegung,
Erzeugen eines gemittelten Datensatzes für die erste Bewegung,
mehrfaches Durchlaufen des oben beschriebenen Verfahrens zur Analyse eines manuellen Arbeitsschritts für eine zweite Bewegung, wobei sich die zweite Bewegung von der ersten Bewegung unterscheidet,
Erzeugen eines gemittelten Datensatzes für die zweite Bewegung,
Erzeugen der Tabelle unter Verwendung des für die erste Bewegung erzeugten gemittelten Datensatzes und des für die zweite Bewegung erzeugten gemittelten Datensatzes.

Dabei können die erste und die zweite Bewegung Teil desselben manuellen Arbeitsschritts sein und werden dann beispielsweise hintereinander ausgeführt, sie können jedoch auch während unterschiedlicher manueller Arbeitsschritte ausgeführt werden. Mit dem vorgeschlagenen Verfahren wird in automatisierter Art und Weise die Tabelle für eine Arbeitsablaufzeitanalyse für unterschiedliche während manueller Arbeitsschritte auftretender bzw. von einem Werker händisch durchgeführter Bewegungen erstellt. Aufgrund der computergestützten Lösung ist es möglich, die Daten für die Tabelle, also jeweils die Bewegung samt dazu ermittelter Kenngröße, im Linienbetrieb zu erzeugen und damit realistische bzw. realitätsnahe Datensätze zu erhalten. Diese basieren dann nicht mehr nur auf wenigen, nicht unter reellen Bedingungen wie beispielsweise einem Linienbetrieb durchgeführten Muster- oder Beispielbewegungen. Auch die Auswertung zur Ermittlung der Kenngröße erfolgt im Gegensatz zum Stand der Technik digital und ermöglicht somit eine höhere Genauigkeit.

In einer Weiterentwicklung erstreckt sich das jeweilige mehrfache Durchlaufen des Verfahrens zur Analyse eines manuellen Arbeitsschritts über einen Zeitraum von mindestens einer Woche. Alternativ oder zusätzlich wird die erste bzw. die zweite Bewegung von mindestens zwei unterschiedlichen Werkern ausgeführt.

Da der Einsatz des vorgeschlagenen Verfahrens wie beschrieben vorzugsweise im Linienbetrieb erfolgt, können die Datensätze für die Tabelle im Linienbetrieb über einen beliebig langen Zeitraum aufgezeichnet bzw. erzeugt werden. Auch besteht die Möglichkeit, dass eine jeweilige untersuchte Bewegung von unterschiedlichen Personen ausgeführt wird. Durch die oben aufgeführte Mittelung des jeweils erzeugten Datensatzes mit den für die gleiche Bewegung erzeugten weiteren Datensätzen lassen sich die dann enthaltenen Kenngrößen deutlich realistischer darstellen. Ein späteres Anpassen der ermittelten Werte im laufenden Betrieb für ein neues Produkt wird somit weniger häufig notwendig werden.

Gemäß einer Weiterbildung ist die erstellte Tabelle eine MTM-Tabelle oder eine REFA Tabelle.

Die MTM Tabelle oder REFA Tabelle kann in Form einer Datenbank auf einem Server oder Cloudspeicher abgelegt werden.

Mit Vorteil kann die erzeugte Tabelle im laufenden Betrieb wiederum dafür verwendet werden, die korrekte Ausführung von manuellen Arbeitsschritten zu überprüfen.

Demgemäß betrifft ein weiterer Aspekt der vorliegenden Erfindung ein Verfahren zum Überprüfen eines manuellen Arbeitsschritts. Dieses weist die folgenden Schritte auf:
optisches Erfassen mindestens einer während des manuellen Arbeitsschritts von einem Werker ausgeführten Bewegung, Erzeugen entsprechender Bilddaten und Erstellen einer Trajektorie aus den Bilddaten, wobei die Trajektorie mindestens eine Ortsinformation und eine zugehörige Zeitinformation umfasst,
Ermitteln einer Kenngröße der Bewegung anhand der Trajektorie,
Vergleichen der Kenngröße mit der für diese Bewegung in der Tabelle, welche mit dem oben beschriebenen Verfahren erzeugt wurde, gespeicherten Kenngröße, und
Ausgeben eines Warnsignals bei einer Abweichung der Kenngrößen.

Im laufenden Betrieb werden demgemäß die während eines manuellen Arbeitsschritts von einem Werker ausgeführten Bewegungen optisch erfasst und in eine Trajektorie umgewandelt. Aus der Trajektorie wird eine Kenngröße für die Bewegung ermittelt, welche eine wie bereits oben beschriebene Kenngröße sein kann, beispielsweise eine Zeitdauer der Bewegung oder eine während der Bewegung zurückgelegte Strecke, oder eine erreichte Geschwindigkeit oder Beschleunigung. Diese aktuell im laufenden Betrieb ermittelte Kenngröße wird verglichen mit der Kenngröße, die für die aktuell überprüfte Bewegung in der wie oben beschrieben erzeugten Tabelle hinterlegt ist. Wird hierbei festgestellt, dass die aktuell bestimmte Kenngröße signifikant von der gespeicherten Kenngröße abweicht, wird ein Warnsignal ausgegeben. Ebenfalls ist es möglich, ein Signal auszugeben, welches eine auf den manuellen Arbeitsschritt nachfolgende bzw. angewiesene Maschine ansteuert und die Maschine über den manuellen Arbeitsschritt informiert.

Beispielsweise können als Referenz Kenngrößen wie z.B. Zielzeiten, oder Trajektorienbereiche, auch bezeichnet als Korridore, etc. sozusagen als Soll in der Tabelle vorgegeben werden. Jede Bewegung kann bezüglich dieser Vorgaben anhand von Absolutwerten überprüft werden, also auf Einhaltung des Soll-Bewegungskorridors oder der Zielzeiten etc. Alternativ oder zusätzlich kann jeweils eine mittlere Abweichung pro Zeiteinheit, eine Standardabweichung, 1 Sigma, 2 Sigma, 3 Sigma oder ein gleitender Durchschnitt ermittelt und überprüft werden. Dadurch können verschiedenste Kenngrößen für den Prozess ermittelt werden, um je nach gewünschter Zeiteinheit eine Aussage über die Qualität der Prozessausführung, mittlere Dauer, größte Abweichung vom Mittel etc. zu treffen.

In einer beispielhaften Anwendung werden Handbewegungen eines Werkers beim Platzieren eines Bauteils überprüft. Dabei werden die tatsächlichen Bewegungen mit den Soll-Trajektorien der Tabelle verglichen und Abweichungen analysiert. Dadurch können Produktionsprozesse optimiert und die Qualität der manuellen Arbeitsschritte verbessert werden.

Mit dem angegebenen Verfahren lässt sich die korrekte Ausführung von mindestens einer, oder aller, während eines manuellen Arbeitsschritts ausgeführten Bewegungen überprüfen. Diese Überprüfung kann nach jedem Arbeitsschritt auch vor Fertigstellung des Endprodukts durchgeführt werden, so dass fehlerhafte Zwischenprodukte bereits frühzeitig aussortiert werden können. Auch lässt sich damit beispielsweise eine typische Fehlerrate für jede Bewegung ermitteln, welche beispielsweise zusätzlich zu dem für die Bewegung abgespeicherten Datensatz der Tabelle hinzugefügt werden kann. Durch die so ermittelten Daten, welche statistisch abgesicherte Zeiten und unter Umständen Fehlerraten umfassen, lassen sich Optimierungen von manuellen Arbeitsprozessen erreichen.

Ein weiterer Aspekt der vorliegenden Erfindung betrifft eine Anordnung zur Analyse und/oder zum Überprüfen eines manuellen Arbeitsschritts. Die Anordnung weist eine Kamera und eine mit der Kamera verbundene Auswerteeinheit auf. Die Kamera ist dazu eingerichtet, mindestens eine Bewegung optisch zu erfassen, wobei die Bewegung während des Arbeitsschritts von einem Werker ausgeführt wird. Die Auswerteeinheit ist dazu eingerichtet, Bilddaten entsprechend der mindestens einen Bewegung zu erzeugen und anhand dieser Bilddaten zu der ausgeführten Bewegung eine Trajektorie in Abhängigkeit der mindestens einen optisch erfassten Bewegung zu erstellen. Ferner ist die Auswerteeinheit dazu eingerichtet, mehrere für die Bewegung sukzessive erstellte Trajektorien zu analysieren, in Abhängigkeit dieser Analyse eine Kenngröße zu ermitteln und einen Datensatz bereitzustellen. In diesem Datensatz ist der mindestens einen Bewegung die mindestens eine ermittelte Kenngröße zugeordnet. Jede Trajektorie umfasst dabei eine Zeitinformation und eine zugehörige Ortsinformation.

Die erfindungsgemäße Anordnung stellt die optisch erfassten Bewegungen in Form von Trajektorien dar und ermittelt für jede Bewegung aus mehreren Trajektorien mindestens eine für diese Bewegung charakteristische Kenngröße, beispielsweise die benötigte Zeit oder zurückgelegte Strecke oder ähnliches. Die Kenngröße wird zusammen mit der Bewegung in einem Datensatz abgespeichert. Auf Basis der mit der Anordnung erzeugten Datensätze lassen sich realistische Fertigungskosten für ein geplantes Produkt, zu dessen Herstellung die Ausführung der Bewegungen erforderlich ist, realistisch vorhersagen.

Gemäß einer Ausgestaltung werden die oben beschriebenen Verfahren unter Verwendung der erfindungsgemäßen Anordnung implementiert.

Die Auswerteeinheit ist insbesondere als Mikroprozessor realisiert, welcher separat oder als Teil der Kamera implementiert ist.

Im Übrigen gelten für die Anordnung die Ausführungen zu den erfindungsgemäßen Verfahren entsprechend, dies betrifft insbesondere Vorteile und Ausführungsformen.

Die genannten Ausführungsformen können untereinander kombiniert werden, sofern sich nicht explizit etwas anderes ergibt oder erwähnt ist.

Insbesondere ist die erfindungsgemäße Anordnung zur Ausführung der beschriebenen erfindungsgemäßen Verfahren eingerichtet.

Gemäß einer Weiterbildung repräsentiert der Datensatz einen Eintrag einer Methods Time Measurement, MTM-, Tabelle oder einer REFA Tabelle.

Der mit der Anordnung für eine jeweilige Bewegung erzeugte Datensatz kann im Format eines MTM Datensatzes oder eines REFA Datensatzes gespeichert werden. Alternativ oder zusätzlich kann der Datensatz in einem proprietären Format gespeichert werden, um eine unternehmensspezifische Datenbank zu realisieren, die die Grundlage für eine Analyse und Überwachung von manuellen Arbeitsschritten in der Fertigung bildet.

Nachfolgend wird die Erfindung rein beispielhaft unter Bezugnahme auf die Zeichnungen beschrieben. Funktions- bzw. wirkungsgleiche Zeichnungselemente tragen gleiche Bezugszeichen. Es zeigen:
- Fig. 1: eine schematische Darstellung eines beispielhaften Fertigungsarbeitsplatzes an dem die erfindungsgemäßen Verfahren eingesetzt werden,
- Fig. 2: beispielhafte während des Verfahrens erzeugte Bilddaten, und
- Fig. 3: beispielhafte zu Fig. 2 erzeugte Trajektorien.

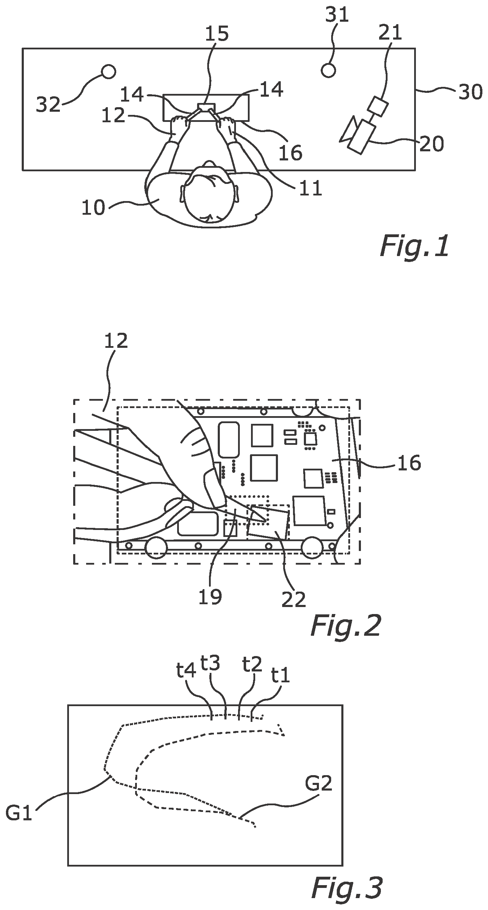

Fig. 1 zeigt eine schematische Darstellung eines beispielhaften Fertigungsarbeitsplatzes an dem das erfindungsgemäße Verfahren eingesetzt wird. Eine Person, hier ein Werker 10, arbeitet an dem beispielhaften Fertigungsarbeitsplatz 30 unter Einsatz seiner rechten Hand 11 und seiner linken Hand 12. Beispielsweise wird mit der rechten Hand 11 ein Lötkolben 13 als beispielhaftes Werkzeug geführt. Mit der linken Hand 12 wird ein Lötzinn 14 gehalten. Ein einzulötendes Bauteil 15 ist auf einer Platine 16 platziert. Eine feststehende Kamera 20 ist in Relation zu dem Werker 10 und dem Fertigungsarbeitsplatz 30 so montiert, dass sie die Bewegungen des Werkers 10 optisch erfassen kann. Die Auswertung der erfassten Bewegungen erfolgt in einer mit der Kamera 20 verbundenen Auswerteinheit 21.

In der beispielhaften Darstellung von Fig. 1 hat der Werker 10 bereits den Lötkolben 13 aus dessen Ruheposition 31 am Fertigungsarbeitsplatz 30 geholt und am einzulötenden Bauteil 15 positioniert. Des Weiteren hat der Werker 10 das Lötzinn 14 aus dessen Ruheposition 32 am Fertigungsarbeitsplatz 30 genommen und ebenfalls zum einzulötenden Bauteil 15 bewegt.

Fig. 2 zeigt beispielhafte während der erfindungsgemäßen Verfahren erzeugte Bilddaten. Die Hand 12, von der lediglich die Finger zu sehen sind, hält eine Pinzette 19, mit welcher wiederum eine Wärmeleitmatte 22 gegriffen wird. Die Wärmeleitmatte 22 soll in diesem beispielhaften Arbeitsschritt auf der Platine 16 platziert werden. Es ist zu sehen, dass sowohl die Platine 16, als auch die Pinzette 19 und die Wärmeleitmatte 22 erkannt und jeweils mit einer sogenannten Bounding Box umrandet wurden. Auf diese Weise werden die Bewegung bzw. Bewegungen dieser Objekte beim optischen Erfassen erkannt, verfolgt und in Trajektorien umgewandelt.

Fig. 3 zeigt demgemäß die aus dem zu Fig. 2 gehörenden manuellen Arbeitsschritt erzeugten Trajektorien G1 und G2. Die Trajektorien G1 und G2 sind zweidimensional dargestellt, haben also zwei Ortsinformationen, wobei jeder Trajektorie noch verschiedene Zeitinformationen ti zugeordnet sind. Die Trajektorie G1 zeigt beispielsweise die mit der Pinzette 19 aus Fig. 2 durchgeführte Bewegung, während die Trajektorie G2 die Bewegung der mit der Pinzette 19 gehaltenen Wärmeleitmatte 22 repräsentiert.

Die Figuren 2 und 3 beruhen auf der Erfassung der Bewegungen von Pinzette und Wärmeleitmatte, die direkt bzw. indirekt der von dem Werker ausgeführte

Bewegung entsprechen. Für die erfindungsgemäßen Verfahren ist die Erfassung einer der beiden Bewegungen ausreichend.

### Bezugszeichenliste

- 10: Werker
- 11, 12: Hand
- 13: Lötkolben
- 14: Lötzinn
- 15: Bauteil
- 16: Platine
- 19: Pinzette
- 20: Kamera
- 21: Auswerteeinheit
- 22: Wärmeleitmatte
- 30: Fertigungsarbeitsplatz
- 31, 32,: Position
- G1, G2, ..., G9: Trajektorie
- t1, t2, t3, t4: Zeitpunkt

## Patentansprüche

1. Computerimplementiertes Verfahren zur Analyse eines manuellen Arbeitsschritts aufweisend folgende Schritte:
mehrfaches optisches Erfassen mindestens einer während des Arbeitsschritts von einem Werker ausgeführten Bewegung, Erzeugen entsprechender Bilddaten, und Erstellen je einer Trajektorie (G1, G2) aus den Bilddaten,
wobei die Trajektorie (G1, G2) mindestens eine Ortsinformation und eine zugehörige Zeitinformation umfasst,
Bereitstellen einer Vielzahl von Trajektorien (G1, G2),
Ermittlung mindestens einer Kenngröße der mindestens einen Bewegung durch Auswertung mehrerer der Vielzahl von erstellten Trajektorien (G1, G2),
Bereitstellen eines Datensatzes in welchem der mindestens einen Bewegung die mindestens eine ermittelte Kenngröße zugeordnet ist.

2. Verfahren nach Anspruch 1,
wobei das optische Erfassen unter Verwendung einer an dem Werker oder an seinem Arbeitsplatz montierten Kamera erfolgt.

3. Verfahren nach Anspruch 1 oder 2,
wobei die mindestens eine Kenngröße die mindestens eine während des Arbeitsschritts ausgeführte Bewegung charakterisiert und einen der folgenden Werte aufweist: eine Zeitdauer, eine Geschwindigkeit, eine Beschleunigung, eine Streckenlänge, eine Komplexität jeweils der Bewegung.

4. Verfahren nach dem vorstehenden Anspruch,
wobei die Ermittlung der mindestens einen Kenngröße eine statistische Auswertung, insbesondere eine Mittelwertbildung, umfasst und die Kenngröße eine jeweils über mehrere der Vielzahl von Trajektorien (G1, G2) gemittelte Zeitdauer, Geschwindigkeit, Beschleunigung, Streckenlänge, Komplexität jeweils der Bewegung repräsentiert.

5. Verfahren nach einem der vorstehenden Ansprüche,
weiter aufweisend:
Generieren eines graphischen Bewegungsmusters der Bewegung anhand mehrerer der Vielzahl von erstellten Trajektorien (G1, G2), insbesondere durch Überlagerung und/oder Mittelung, und
Hinzufügen des Bewegungsmusters zu dem Datensatz.

6. Verfahren nach einem der vorstehenden Ansprüche,
wobei der Datensatz einen Eintrag einer Methods-Time Measurement, MTM-, Tabelle und/oder einer REFA-Tabelle bildet.

7. Verfahren nach einem der vorstehenden Ansprüche,
wobei das Erstellen einer jeden Trajektorie (G1, G2) die folgenden Schritte umfasst:
Erkennen eines die Bewegung durchführenden Körperteils, insbesondere einer Hand, des Werkers und/oder eines vom Werker geführten Werkzeugs und/oder Bauteils in den Bilddaten,
mehrfaches Bestimmen einer Position des Körperteils und/oder Werkzeugs und/oder Bauteils in aufeinander folgenden Einzelbildern der Bilddaten und Bereitstellen von entsprechenden Objektpunkten in einem Zeit-Ort-Diagramm,
Anfertigen der Trajektorie (G1, G2) durch Verbinden der Objektpunkte.

8. Verfahren zum computergestützten Erzeugen einer Tabelle für eine Arbeitsablauf-Zeitanalyse aufweisend:
mehrfaches Durchlaufen des Verfahrens zur Analyse eines manuellen Arbeitsschritts nach einem der vorstehenden Ansprüche für eine erste Bewegung,
Erzeugen eines gemittelten Datensatzes für die erste Bewegung,
mehrfaches Durchlaufen des Verfahrens zur Analyse eines manuellen Arbeitsschritts nach einem der vorstehenden Ansprüche für eine zweite Bewegung, wobei sich die zweite Bewegung von der ersten Bewegung unterscheidet,
Erzeugen eines gemittelten Datensatzes für die zweite Bewegung,
Erzeugen der Tabelle unter Verwendung des für die erste Bewegung erzeugten gemittelten Datensatzes und des für die zweite Bewegung erzeugten gemittelten Datensatzes.

9. Verfahren nach dem vorstehenden Anspruch,
wobei sich das jeweilige mehrfache Durchlaufen des Verfahrens zur Analyse eines manuellen Arbeitsschritts über einen Zeitraum von mindestens einer Woche erstreckt, und/oder
wobei die erste bzw. die zweite Bewegung von mindestens zwei unterschiedlichen Werkern ausgeführt wird.

10. Verfahren nach Anspruch 8 oder 9,
wobei die Tabelle eine MTM-, Tabelle oder eine REFA-Tabelle ist.

11. Verfahren zum Überprüfen eines manuellen Arbeitsschritts aufweisend folgende Schritte:
optisches Erfassen mindestens einer während des manuellen Arbeitsschritts von einem Werker ausgeführten Bewegung, Erzeugen entsprechender Bilddaten, und Erstellen einer Trajektorie (G1, G2) aus den Bilddaten,
wobei die Trajektorie (G1, G2) mindestens eine Ortsinformation und eine zugehörige Zeitinformation umfasst,
Ermitteln einer Kenngröße der Bewegung anhand der Trajektorie (G1, G2), Vergleichen der Kenngröße mit der für diese Bewegung in der Tabelle, welche mit dem Verfahren nach einem der Ansprüche 8 bis 10 erzeugt wurde, gespeicherten Kenngröße,
Ausgeben eines Warnsignals bei einer Abweichung der Kenngrößen.

12. Anordnung zur Analyse und/oder zum Überprüfen eines manuellen Arbeitsschritts aufweisend
eine Kamera (20), die dazu eingerichtet ist, mindestens eine Bewegung (B1) optisch zu erfassen, wobei die Bewegung (B1) während des Arbeitsschritts von einem Werker (10) ausgeführt wird, und
eine mit der Kamera (20) verbundene Auswerteeinheit (21), die dazu eingerichtet ist, Bilddaten entsprechend der mindestens einen Bewegung zu erzeugen und anhand dieser Bilddaten zu der ausgeführten Bewegung eine Trajektorie (G1, G2) in Abhängigkeit der mindestens einen optisch erfassten Bewegung zu erstellen,
die Auswerteeinheit ist ferner dazu eingerichtet, mehrere für die Bewegung sukzessive erstellte Trajektorien (G1, G2) zu analysieren und in Abhängigkeit dieser Analyse eine Kenngröße zu ermitteln und einen Datensatz, in welchem der mindestens einen Bewegung die mindestens eine ermittelte Kenngröße zugeordnet ist, bereitzustellen,
wobei jede Trajektorie (G1, G2) eine Zeitinformation und eine zugehörige Ortsinformation umfasst.

13. Anordnung nach dem vorigen Anspruch,
wobei der Datensatz einen Eintrag einer Methods-Time Measurement, MTM-, Tabelle oder einer REFA-Tabelle bildet.
